# FASCICULE DE BREVET EUROPEEN

(11) **EP 3 362 667 B1**
(45) Date de publication et mention de la délivrance du brevet: **27.02.2019**
(21) Numéro de dépôt: 16794703.5
(22) Date de dépôt: 13.10.2016
(51) Int. Cl.: F02K 1/12, F02K 3/06

(54) **TUYÈRE DE SECTION VARIABLE POUR NACELLE D'AÉRONEF ET NACELLE POUR UN TURBORÉACTEUR D'AÉRONEF COMPORTANT UNE TELLE TUYÈRE**
DÜSE MIT VERÄNDERLICHEM QUERSCHNITT FÜR EINE FLUGZEUGTRIEBWERKSGONDEL UND GONDEL FÜR EIN TRIEBWERK MIT SOLCH EINER DÜSE
VARIABLE CROSS-SECTION NOZZLE FOR AN AIRCRAFT NACELLE AND NACELLE FOR AN AIRCRAFT ENGINE COMPRISING SUCH A NOZZLE

(30) Priorité: 13.10.2015 FR 1559743
(43) Date de publication de la demande: 22.08.2018
(73) Titulaire: Safran Nacelles, 76700 Gonfreville-l'Orcher (FR)
(72) Inventeur: KERBLER, Olivier, 76700 Gonfreville L'orcher (FR); GRALL, Loïc, 76700 Gonfreville L'orcher (FR); GLEMAREC, Guillaume, 76700 Gonfreville L'orcher (FR); GALASSO, Amadéo, 76700 Gonfreville L'orcher (FR); FAUGERAS, José, 76700 Gonfreville L'orcher (FR); SERISET, Mélody, 76700 Gonfreville L'orcher (FR)
(74) Mandataire: Gaillarde, Frédéric F. Ch.
(86) Numéro de dépôt international: PCT/FR2016/052639
(87) Numéro de publication internationale: WO 2017/064422

(56) Documents cités:
- WO-A1-2015/001276
- FR-A- 1 147 262
- US-A- 4 295 611

## Description

La présente invention se rapporte à une tuyère de section variable pour une nacelle d'aéronef ainsi qu'à une nacelle pour un turboréacteur d'aéronef comportant une telle tuyère de section variable.

Des documents FR 1.147.262, WO 2015/001276 A1 et US 4,295,611, des tuyères de section variable sont connues.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseur de poussée.

Une nacelle présente généralement une structure tubulaire suivant un axe longitudinal comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur. La structure tubulaire est généralement terminée par une tuyère d'éjection dont la sortie est située en aval du turboréacteur.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire, également appelé «veine secondaire».

On entend ici par le terme « aval » la direction correspondant au sens du flux d'air froid pénétrant dans le turboréacteur. Le terme « amont » désigne la direction opposée.

Ladite veine secondaire est formée par une structure externe, dite Outer Fixed Structure (OFS) et une structure interne concentrique, dite Inner Fixed Structure (IFS), entourant la structure du moteur proprement dite à l'aval de la soufflante. Les structures interne et externe appartiennent à la section aval. La structure externe peut comporter un ou plusieurs capots coulissant suivant l'axe longitudinal de la nacelle entre une position permettant l'échappement du flux d'air inversé et une position empêchant un tel échappement.

La nacelle se termine par une tuyère primaire d'éjection comprenant, d'une part, un module externe, aussi appelé buse primaire ou tuyère externe, placé dans la continuité structurelle de l'IFS et formant un bord de fuite de la tuyère primaire d'éjection, et d'autre part, un module interne, aussi appelé cône d'éjection, les modules interne et externe définissent ensemble un canal d'écoulement du flux primaire sortant du turboréacteur.

Le capot coulissant de la structure externe appartient à la section arrière et présente un côté aval, aussi appelé buse secondaire, formant la tuyère secondaire d'éjection visant à canaliser l'éjection du flux d'air secondaire. Cette tuyère fournit la majeure partie de la poussée nécessaire pour la propulsion en imprimant une vitesse aux flux d'éjection. Cette tuyère secondaire peut être associée à un système d'actionnement indépendant ou non de celui du capot permettant de faire varier et d'optimiser la section de sortie du flux secondaire en fonction de la phase de vol dans laquelle se trouve l'aéronef.

En effet, dans le cas de moteurs à très fort taux de dilution, pour des raisons d'optimisation aérodynamique pour assurer un fonctionnement correct de la soufflante et aussi pour optimiser la consommation de carburant, il est tout à fait avantageux de pouvoir régler la section de la sortie du flux d'air froid en aval de la nacelle : il est en effet utile de pouvoir augmenter cette section lors des phases de décollage et d'atterrissage, et de la réduire pendant les phases de croisière : on parle souvent de tuyère adaptative, ou bien encore de « VFN » (Variable Fan Nozzle).

Classiquement, la variation de la section de sortie du flux froid est effectuée au moyen d'actionneurs, par exemple hydrauliques ou électromécaniques, permettant de déplacer tout ou partie du carénage extérieur de la nacelle, et en particulier de déplacer des portes, ou volets, formant des parties mobiles par rapport à une structure fixe, lesquelles sont mises en rotation autour d'un axe au moyen de l'un au moins desdits actionneurs.

Les portes de la tuyère adaptative doivent, dans une position fermée, être en continuité avec un capotage arrière, en respectant les lignes aérodynamiques interne et externe de la nacelle.

En position ouverte, les portes de la tuyère adaptative, ou portes VFN, permettent d'augmenter la section de sortie, tout en respectant un angle d'ouverture maximum qui ne perturbe pas la poussée moteur (convergent), et également une fuite suffisante pour les objectifs d'amélioration de l'opérabilité moteur, réduction de bruit et de consommation.

Toutefois, les cinématiques de telles portes VFN munies de ce type de mécanisme, assurant leur mise en rotation autour d'un axe au moyen d'un actionneur, par exemple de type vérin, nécessitent une course dudit actionneur importante du fait de la translation des portes et de la rotation pour obtenir l'angle voulu (flux divergent ou convergent).

Par ailleurs, une course importante de l'actionneur implique un dimensionnement adapté de la structure extérieure et de celui de la porte, c'est-à-dire plus grand, et par conséquent plus encombrant.

Une solution envisageable serait de concevoir des actionneurs de dimensions réduites présentant une course limitée. Toutefois, ce type de mécanisme ne permet pas d'obtenir une convergence du flux avec un débit suffisant pour une course limitée de l'actionneur.

Un but de la présente invention est donc de proposer une nacelle ne présentant pas tout ou partie des inconvénients précités et répondant à tout ou partie de ces besoins.

A cet effet, la présente invention a pour objet une tuyère de section variable pour nacelle d'aéronef, selon la revendication 1, présentant un axe longitudinal, la tuyère comprenant des portes mobiles entre une position de moindre section et une position de plus grande section, et des moyens de déplacement pour déplacer chacune des portes entre lesdites positions, ces moyens de déplacement comportant des actionneurs et des moyens de commande de ces actionneurs, la tuyère étant caractérisée en ce que chacune des portes comprend au moins un premier et un deuxième moyens de guidage pour guider le déplacement des portes par rapport à une structure fixe de la tuyère, le deuxième moyen de guidage étant placé en aval par rapport au premier moyen de guidage, les premier et deuxième moyens de guidage étant agencés pour assurer chacun, au moins localement, une trajectoire sensiblement curviligne.

Une telle structure permet, en particulier grâce au guidage de chaque porte en au moins deux points de celle-ci de sorte que ces points soient distincts et distant longitudinalement l'un par rapport à l'autre, d'obtenir une trajectoire de déplacement de chacune de ces dites portes qui n'interfère pas avec les lignes aérodynamiques internes de la nacelle. Ceci permet également :
- d'ouvrir et d'avancer la porte au maximum pour obtenir une fuite nécessaire au débit d'air voulu ; et
- de limiter l'angle de la porte afin de ne pas dépasser une valeur d'angle qui génèrerait un flux divergent.

Par ailleurs, la présence d'au moins deux moyens de guidage distant longitudinalement l'un par rapport à l'autre permet de contrer plus efficacement les efforts de hoop (« hoop stresses »). En effet, plus l'épaisseur d'une porte est fine et plus les efforts de hoop à contrer sont importants. La présence de deux moyens de guidage permet ainsi d'assurer une résistance améliorée de la tuyère lors de son utilisation et d'utiliser des portes d'épaisseur réduite. Dans le cas contraire, avec un unique moyen de guidage, la porte devrait être nécessairement plus épaisse.

Chacune des portes est délimitée longitudinalement, par un bord amont et un bord aval, et latéralement, par deux flancs latéraux, chacune des portes de la tuyère comprenant au moins un premier et un second moyens de guidage au niveau de chacun de ses flancs latéraux. De cette manière un premier moyen de guidage est à associé à un second moyen de guidage, cette paire de premier et moyen de guidage équipant chaque flanc latéral de chaque porte. Cette caractéristique permet de contrer plus efficacement encore les efforts de hoop et de réduire l'épaisseur des portes de la tuyère. Cela permet également d'assurer un équilibre de la porte lors de son utilisation et d'assurer un équilibre des pressions s'exerçant sur celle-ci.

Selon une caractéristique technique particulière, chaque porte présente un centre de poussée, ledit centre de poussée étant, lors de l'utilisation de la tuyère, situé longitudinalement entre les premier et deuxième moyens de guidage, de préférence sensiblement entre 30% et 50% d'une longueur axiale de la porte par rapport au bord amont.

Avantageusement encore, chacune des portes présente un centre de gravité, ledit centre de gravité étant, lors de l'utilisation de la tuyère, situé longitudinalement entre les premier et deuxième moyens de guidage, de préférence sensiblement entre 30 et 50% de la longueur axiale de la porte par rapport audit bord amont.

Dans une configuration technique particulière, les premier et deuxième moyens de guidage comprennent au moins un rail agencé pour coulisser dans au moins une portion de glissière.

On notera que le terme « rail » doit être compris dans un sens large, de sorte qu'il couvre également des galets ou des roulements guidés par des pistes formant glissières.

Concernant les glissières, on notera que chaque moyen de guidage peut présenter sa propre glissière guidant le rail associé, ou bien les rails des deux moyens de guidage peuvent être guidés par une même glissière, ces deux rails étant décalés longitudinalement et étant guidés durant le déplacement de la porte dans des portions différentes de cette glissière.

Dans la suite de la description les vocables « premier rail » et « première glissière » ou « première portion de glissière » désigneront les rail et glissière ou portion de glissière du premier moyen de guidage. De même les vocables « deuxième rail » et « deuxième glissière » ou « deuxième portion de glissière » désigneront les rail et glissière ou portion de glissière du deuxième moyen de guidage.

Avantageusement encore, les premier et deuxième moyens de guidage, de préférence leur rail, sont espacés longitudinalement l'un par rapport à l'autre d'une distance au moins égale à 2/5, soit 40%, de la longueur axiale de la porte prise entre ses bords amont et aval.

Selon une caractéristique technique avantageuse, le premier moyen de guidage, de préférence son rail, est positionné longitudinalement à une distance sensiblement comprise entre 5% et 15% de la longueur axiale de la porte par rapport à son bord amont, de préférence encore à une distance sensiblement comprise entre 5% et 10% de la longueur axiale de la porte par rapport à son bord amont.

Selon une autre caractéristique, le deuxième moyen de guidage, de préférence son rail, est positionné longitudinalement sensiblement entre le milieu et le bord aval de la porte, de préférence encore, à une distance sensiblement comprise entre 50% et 75% de la longueur axiale de la porte par rapport à son bord amont.

De préférence, les trajectoires assurées par les premier et deuxième moyens de guidage sont sensiblement circulaires, décrivant chacune sensiblement un arc de cercle, la trajectoire décrite par le premier moyen de guidage au moins présentant de préférence une partie concave orientée vers l'intérieur de la tuyère.

Un rayon de la première trajectoire est choisi de préférence de sorte que sa valeur soit au moins égale à deux fois une épaisseur maximale de la porte, cette épaisseur étant mesurée radialement par rapport à la tuyère, c'est-à-dire orthogonalement à l'axe longitudinal de ladite tuyère.

Dans ce même cas, où les première et deuxième trajectoires, assurées respectivement par les premier et deuxième moyens de guidage, sont sensiblement circulaires, les glissières guidant le déplacement des rails présentent chacune une forme générale en arc de cercle. De préférence dans ce cas, les rails présentent également une forme sensiblement en arc de cercle. Une telle forme du rail permet d'optimiser la pression de contact du rail dans la glissière associée.

Selon une caractéristique particulière, les trajectoires, une première et une deuxième trajectoires, assurées respectivement par les premier et deuxième moyens de guidage, présentent un centre de trajectoire commun.

Dans ce cas, la deuxième trajectoire décrite par le deuxième moyen de guidage présente une partie concave également orientée vers l'intérieur de la tuyère.

Alternativement, dans le cas où leurs centres de trajectoires sont distincts, la deuxième trajectoire décrite par le deuxième moyen de guidage présente de préférence une partie concave orientée vers l'extérieur de la tuyère. Une telle configuration permet notamment une ouverture et une fermeture plus rapide de la porte tout en respectant les exigences aérodynamiques.

Selon une autre caractéristique particulière, chacune des portes comprend une gorge dans laquelle se loge un ergot solidaire d'une structure fixe de la tuyère de sorte à former un système de verrouillage de ladite porte.

Selon une caractéristique avantageuse, les flancs latéraux de chacune des portes s'étendent selon une direction longitudinale et sont sensiblement parallèles.

En effet, classiquement, les tuyères à géométrie variable présentent des portes ayant des formes sensiblement trapézoïdales. Ce type de portes trapézoïdales présente plusieurs inconvénients, notamment en ce qu'elles ne peuvent pas établir une continuité aérodynamique avec le reste de la tuyère et de la nacelle en position inactive et nécessite la mise en place de mécanismes complexes pour la mise en mouvement de ces portes.

Au contraire, l'utilisation de portes présentant des flancs latéraux sensiblement parallèles permet notamment de simplifier et fiabiliser les mécanismes de mise en mouvement de ces portes et inscrire plus simplement les portes dans la continuité aérodynamique, au moins localement, de la tuyère.

Avantageusement encore, la tuyère comprend latéralement, de part et d'autre de chaque porte, au moins une bavette latérale permettant d'assurer une étanchéité latérale pour guider le flux lorsque la porte associée est mue vers l'extérieur de la tuyère. De préférence, les bavettes latérales sont solidaires de la structure fixe de la tuyère.

Les vocables « fixe » et « mobile » précités sont relatifs à la tuyère elle-même. Il est entendu que cette structure fixe par rapport à la tuyère peut être une structure mobile par rapport à la nacelle. C'est d'ailleurs le cas lorsque la tuyère est portée par un capot mobile d'inverseur de poussée.

Selon une autre caractéristique avantageuse, au moins un premier et un deuxième moyens de guidage sont intégrés, ensemble, dans une structure de guidage comprenant :
- un boitier destiné à venir se loger dans une épaisseur de la structure fixe de la tuyère et à y être fixé par des moyens de fixation amovibles, le boitier comprenant une partie inférieure et une partie supérieure amovibles l'une par rapport à l'autre,
- une première partie des premier et deuxième moyens de guidage, portée par le boitier,
- une seconde partie des premier et deuxième moyens de guidage, agencée pour être positionnée sur le flanc latéral de la porte mobile associée et agencée pour coopérer de façon mobile avec la première partie des premier et deuxième moyens de guidage, respectivement, et
- des moyens de réglage de la structure de guidage, comprenant de préférence au moins une première cale de réglage en hauteur, selon une direction radiale de la tuyère, et au moins une deuxième cale de réglage en largeur, selon une direction transversale de la tuyère, orthoginal à l'axe radial.

De préférences, de telles structures de guidage sont disposées de part et d'autre de chacune des portes.

Les moyens de fixation étant amovibles et le boitier étant à la fois logé dans l'épaisseur de la structure fixe et composée de deux parties inférieure et supérieure amovibles, l'accès aux moyens de guidage est alors facilité lors de la maintenance et la trainée aérodynamique est également minimisée en vol.

Par ailleurs, le réglage affiné de la position des moyens de guidage permet un affleurement amélioré de la porte VFN associée avec un capotage externe de la tuyère. Les lignes aérodynamiques de la nacelle sont donc améliorées et la trainée aérodynamique est encore minimisée.

Enfin, le boitier étant supporté par la structure fixe, la porte mobile est plus légère.

Selon une caractéristique particulière, les moyens de fixation amovibles traversent, de préférence radialement par rapport à la tuyère, au moins la partie inférieure du boitier, la partie supérieure du boitier et la cale de réglage en hauteur pour se fixer dans une poutre de la structure fixe de la tuyère.

Dans une configuration particulière, ces moyens de fixation sont des vis et/ou des tenons.

Selon une autre caractéristique particulière :
- la cale de réglage en largeur est solidaire de la seconde partie des premier et deuxième moyens de guidage ; et/ou
- la cale de réglage en hauteur est solidaire de la première partie des premier et deuxième moyens de guidage.

Avantageusement, en position assemblée, la partie supérieure du boitier et recouverte par un capotage. Ce capotage peut être soit une partie du capotage externe de la structure fixe de la tuyère, soit une pièce distincte solidarisée par des moyens de liaison amovibles.

Dans une configuration particulière, la première partie des premier et deuxième moyens de guidage comprend des glissières, aussi appelées fourreaux ou rainures de glissement. La deuxième partie des premier et deuxième moyens de guidage peut, dans ce cas, comprendre des rails, ou pions, agencés pour coopérer avec lesdites glissières.

Par ailleurs, la présente invention a également pour objet une nacelle pour turboréacteur d'aéronef, caractérisée en ce qu'elle comprend une tuyère à section variable selon l'une quelconque des caractéristiques précitées.

Avantageusement, les portes de la tuyère sont portée par un capot mobile d'un inverseur de poussée, la porte étant encadrée longitudinalement par une partie amont du capot mobile et par un bord de fuite dudit capot mobile. En d'autres termes, dans cette configuration les portes de la tuyère ne forment pas le bord de fuite de la tuyère secondaire de la nacelle, c'est-à-dire qu'elles ne forment pas l'extrémité aval de la tuyère.

D'autres caractéristiques et avantages de la présente invention apparaîtront à la lumière de la description qui va suivre, et à l'examen des figures ci-annexées, dans lesquelles :
- la figure 1 est une représentation générale d'une nacelle de turboréacteur pour un aéronef;
- la figure 2 est une vue schématique en coupe d'une nacelle de turboréacteur;
- les figures 3A et 3B sont des vues en perspective d'une tuyère de section variable d'une nacelle 1 d'aéronef;
- la figure 4 illustre des moyens de guidage d'une porte de tuyère selon un mode de réalisation de l'invention ;
- les figures 5A et 5B sont des vues en coupe d'une tuyère selon le mode de réalisation de la figure 4 au niveau de l'une de ses portes, respectivement en position de moindre section (figure 5A) et de plus grande section (figure 5B) ;
- la figure 6 est une vue de côté de l'une des porte mobile d'une tuyère selon ce même mode de réalisation de la figure 4;
- les figures 7A et 7B sont des vues en coupe d'une tuyère, munies de moyens de guidage, selon un autre mode de réalisation, au niveau de l'une de ses portes, respectivement en position de moindre section (figure 7A) et de plus grande section (figure 7B) ;
- les figures 8 et 9 illustrent des schémas en coupe d'une porte mobile selon le mode de réalisation des figures 7A et 7B, sur lesquels sont illustrées des trajectoires assurées par les moyens de guidage associés ;
- les figures 10A et 10B illustrent deux vues de dos et de face d'une porte selon un mode de réalisation ;
- la figure 11 illustre une vue d'une porte mobile munie d'une structure de guidage au niveau de l'un de ses flancs latéraux selon un mode de réalisation ;
- les figures 12 et 13 illustrent deux vues en perspective de la porte mobile selon ce mode de réalisation ;
- les figures 14, 15A et 15B illustrent des vues en coupe d'une structure de guidage selon ce mode de réalisation ;
- la figure 16 illustre une vue éclatée d'une structure de guidage selon ce mode de réalisation ;
- les figures 17A et 17B illustrent des éléments des premier et deuxième moyens de guidage selon ce mode de réalisation ;
- les figures 18A, 18B, 18C, 18D et 18E illustrent des vues de différentes étapes d'un procédé de démontage d'une structure de guidage selon l'invention.

Sur l'ensemble de ces figures, des références identiques ou analogues désignent des organes ou ensembles d'organes identiques ou analogues.

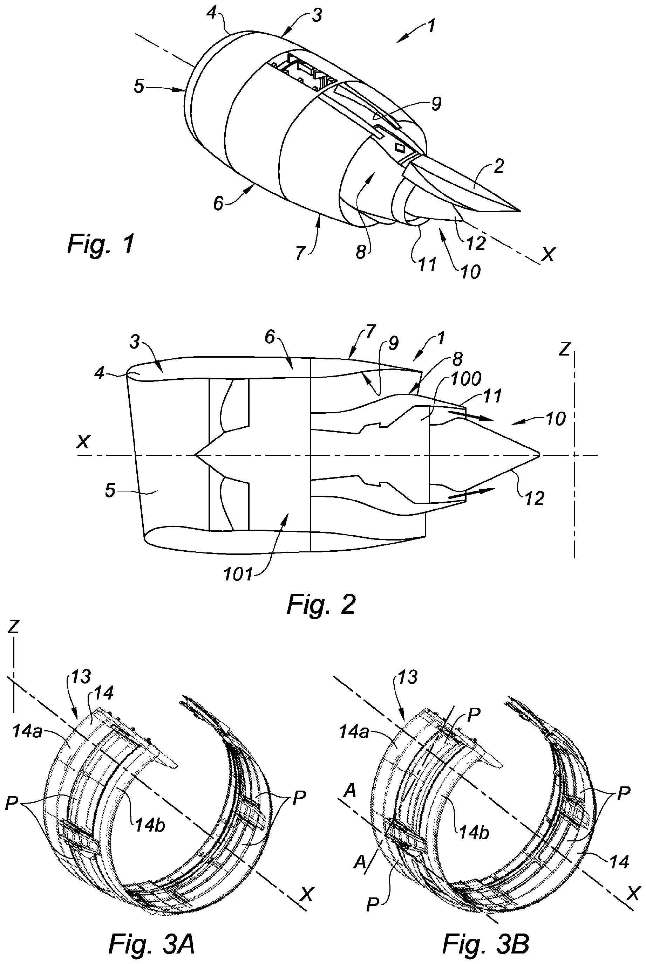

Comme représenté sur les figures 1 et 2, une nacelle 1 présente une forme sensiblement tubulaire selon un axe longitudinal X. Cette nacelle 1 est destinée à être suspendue à un pylône 2, lui-même fixé sous une aile d'un aéronef.

De façon générale, la nacelle 1 comprend une section avant ou amont 3 avec une lèvre d'entrée 4 d'air formant une entrée d'air 5, une section médiane 6 entourant une soufflante 101 d'un turboréacteur 100 et une section arrière ou aval 7. La section aval 7 comprend une structure interne fixe 8 (IFS) entourant la partie amont 3 du turboréacteur 100, et une structure externe fixe (OFS) 9.

L'IFS 8 et l'OFS 9 délimitent une veine annulaire dite « veine secondaire » permettant le passage d'un flux d'air secondaire pénétrant la nacelle 1 au niveau de l'entrée d'air 5.

La nacelle 1 comporte donc des parois délimitant un espace, telle que l'entrée d'air 5 ou la veine secondaire, dans lequel le flux d'air pénètre, circule et est éjecté.

La nacelle 1 se termine par une tuyère d'éjection 10 comprenant un module externe 11 et un module interne 12. Les modules interne 12 et externe 11 définissent un canal d'écoulement d'un flux d'air chaud sortant du turboréacteur.

La section aval 7 de la nacelle comprend en outre une tuyère 13 d'éjection aussi appelée tuyère secondaire visant à canaliser l'éjection du flux d'air secondaire. Cette tuyère 13 fournit la majeure partie de la poussée nécessaire pour la propulsion en imprimant une vitesse aux flux d'éjection. Dans le cas où cette tuyère 13 est portée par un capot mobile d'inverseur de poussée, cette tuyère 13 secondaire peut être associée à un système d'actionnement indépendant ou non de celui dudit capot mobile permettant de faire varier et d'optimiser la section de sortie du flux secondaire en fonction de la phase de vol dans laquelle se trouve l'aéronef.

Les figures 3A et 3B illustrent des vues d'une tuyère 13 de section variable d'une nacelle 1 d'aéronef selon un mode de réalisation de l'invention. Sur ces figures, l'amont de la tuyère 13 est représenté à gauche, et l'aval de la tuyère 13 est représenté à droite. Ainsi, en fonctionnement, l'air pénètre par l'entrée d'air 5 de la nacelle 1, et sort par la tuyère à section variable 13. Comme indiqué dans le préambule de la présente description, il importe de pouvoir faire varier la section de la tuyère 13, lors des différentes phases du vol de l'aéronef.

Dans ce mode de réalisation, cette variation de la section de sortie de la tuyère 13 est obtenue en faisant pivoter des portes P, ici au nombre de quatre, mobiles autour d'axes respectifs A, ces axes étant sensiblement perpendiculaires à l'axe longitudinal X de la nacelle 1.

Ces portes P sont mobiles par rapport à une structure fixe 14 de la tuyère 13 entre une position de moindre section (voir figure 3A) et une position de plus grande section (voir figure 3B).

Dans les modes de réalisations qui suivent, la position de moindre section correspond à une position fermée des portes P, dans laquelle lesdites portes P sont positionnées dans la continuité aérodynamique de la tuyère 13. La position de plus grande section correspond quant à elle à une position dans laquelle les portes P sont positionnées à une ouverture maximale.

La structure fixe 14 de la tuyère 13 est destinée à être solidaire fixement d'un capot mobile d'inverseur de poussée de la nacelle (non illustré), ce capot mobile étant mobile en translation par rapport à une structure fixe de la nacelle.

Les portes P de la tuyère 13 sont encadrées longitudinalement par une partie amont 14a et par une partie aval 14b formant un bord de fuite. En d'autres termes, dans cette configuration les portes P de la tuyère ne forment pas le bord de fuite de la tuyère secondaire de la nacelle.

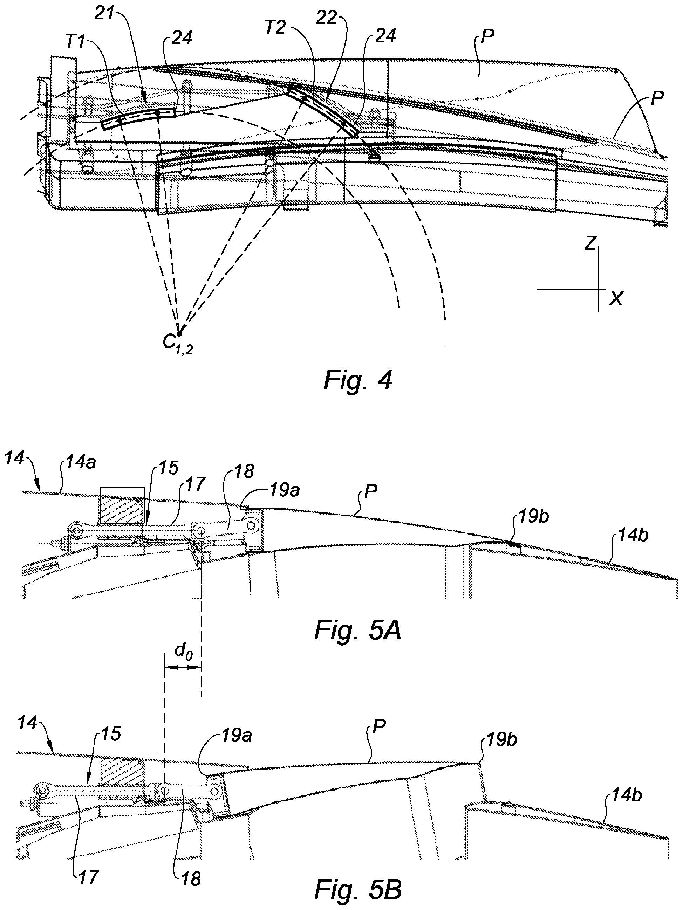

La tuyère 13 comprend en outre des moyens de déplacement 15 (voir par exemple les figures 5A et 5B) pour déplacer chacune des portes P entre lesdites positions de moindre section et de plus grande section. Ces moyens de déplacement 15 comportant des actionneurs 16 et des moyens de commande de ces actionneurs (non illustrés). Ces actionneurs 16 sont des vérins reliés aux portes P par un coulisseau 17 guidé en translation et par une bielle 18 en rotation à la fois par rapport à la porte P à laquelle est liée et par rapport au coulisseau auquel elle est liée.

Chacune des portes est délimitée longitudinalement, par un bord amont 19a et un bord aval 19b, et latéralement, par deux flancs latéraux 20, la bielle 18 étant reliée à la porte P au niveau de son bord amont 19a.

Les figures 4, 5A, 5B et 6 illustrent des moyens de guidage selon un premier mode de réalisation de l'invention.

En particulier, la figure 4 illustre des moyens de guidage 21, 22 d'une porte P de tuyère 13 à section variable selon ce premier mode de réalisation de l'invention.

En effet, chacune des portes P comprend au moins un premier moyen de guidage 21 et un deuxième moyen de guidage 22 pour guider ensemble le déplacement des portes P par rapport à la structure fixe 14 de la tuyère 13.

Les actionneurs 16 effectuent une course rectiligne d₀ sensiblement longitudinale comprise de préférence entre 50 mm et 100 mm. Cette course associée notamment avec la bielle 18 et les moyens de guidage 21, 22 permettent de déplacer la porte P entre ses deux positions de moindre section (voir figure 5A) et une position de plus grande section (voir figure 5B). De préférence, comme cela est illustré sur les figures (par exemple figures 5A et 5B), la cinématique des portes P est configurée de sorte que :
- la porte évolue de la position de moindre section à la position de plus grande section (sens de l'ouverture de la section), lorsque le vérin se rétracte, c'est à dire lorsque les moyens de déplacement 15 déplacent le bord amont 19a de la porte P vers l'amont; et que
- la porte évolue de la position de plus grande section à la position de moindre section (sens de fermeture de la section), lorsque le vérin se déploie, c'est à dire lorsque les moyens de déplacement 15 déplacent le bord amont 19a de la porte P vers l'aval.

Selon l'invention, le deuxième moyen de guidage 22 est placé longitudinalement selon l'axe X en aval par rapport au premier moyen de guidage 21, les premier et deuxième moyens de guidage 21, 22 étant agencés pour assurer chacun au moins localement, au niveau du point de la porte guidée, une trajectoire T1, T2 sensiblement curviligne.

De cette manière, il est possible de concevoir des tuyères 13 à section variable présentant une cinématique améliorée tout en offrant une résistance aux contraintes satisfaisante.

Un tel agencement permet notamment d'obtenir une trajectoire de déplacement de chacune de ces dites portes qui n'interfère pas avec les lignes aérodynamiques internes de la nacelle, ceci tout en permettant à la fois d'ouvrir et d'avancer la porte au maximum pour obtenir une fuite nécessaire au débit d'air voulu et de limiter l'angle de la porte afin de ne pas dépasser une valeur d'angle qui génèrerait un flux divergent.

Par ailleurs, la présence d'au moins deux moyens de guidage 21, 22 décalés longitudinalement l'un par rapport à l'autre permet d'assurer une résistance améliorée de la tuyère 13 lors de son utilisation en contrant les efforts de hoop et d'utiliser des portes d'épaisseur réduite.

On notera que ces moyens de guidage 21, 22 ne sont pas nécessairement alignés selon un axe parallèle à l'axe longitudinal X, il n'en reste pas moins que le deuxième moyen de guidage est en amont du premier moyen de guidage.

De préférence, comme c'est le cas ici, des premier et deuxième moyens de guidage 21, 22 sont disposés, de part et d'autre de chacune des portes P de la tuyère, de sorte qu'ils sont associés par paires de chaque côté. En d'autres termes, chacune des portes P de la tuyère 13 comprend un premier moyen de guidage 21 et un deuxième moyen de guidage 22 disposé au niveau de chacun de ses flancs latéraux 20.

En particulier le deuxième moyen de guidage 22 aval est disposé de sorte à être globalement aligné longitudinalement avec le moyen de guidage 21 amont auquel il est associé. Cela permet notamment de contrer plus efficacement les efforts de hoop et de réduire l'épaisseur des portes P de la tuyère 13 tout en améliorant leur équilibre et des pressions qui s'exercent sur elles lors de leur utilisation.

Contrairement aux idées reçues, l'augmentation du nombre de moyens de guidage 21, 22, et donc de la masse de la tuyère 13 est compensée par la diminution de la masse induite par un dimensionnement optimisé des éléments de la tuyère 13. Cela nous permet donc de diminuer la masse de la tuyère 13 grâce à une conception améliorée de la cinématique des portes P mobiles.

L'équilibre des portes P est en outre amélioré lorsque chaque porte présente :
- un centre de poussée qui, lors de l'utilisation de la tuyère 13, est situé longitudinalement entre les premier et deuxième moyens de guidage 21, 22, de préférence sensiblement entre 30% et 50% d'une longueur L axiale de la porte P par rapport au bord amont 19a ; et/ou
- un centre de gravité qui, lors de l'utilisation de la tuyère 13, est situé longitudinalement entre les premier et deuxième moyens de guidage 21, 22, de préférence sensiblement entre 30 et 50% de la longueur L axiale de la porte P par rapport audit bord amont 19a.

Comme c'est le cas ici, le positionnement longitudinal de tous les premiers moyens de guidage 21 pour une même porte P, et de préférence pour l'ensemble des portes P de la tuyère 13, est identique. De la même manière, le positionnement longitudinal de l'ensemble des deuxièmes moyens de guidage 22 pour une même porte P, et de préférence pour l'ensemble des portes P de la tuyère 13, est identique.

Plus précisément, les premier et deuxième moyens 21, 22 de guidage de comprennent chacun un rail 23 agencé pour coulisser dans au moins une portion de glissière 24. Le rail 23 est ici solidaire de la porte P tandis que les portions de glissière(s) 24 sont chacune solidaires de la structure fixe 14 de la tuyère 13. Les rails 23 comprennent une platine à leur base présentant des orifices adaptés pour que ledit rail 23 soit par exemple vissé latéralement à la porte P.

De cette manière, chaque porte P comprend deux premiers rails 23, avec un premier rail 23 par flanc latéral 20, et deux deuxièmes rails 23, avec un deuxième rail 23 par flanc latéral 20.

Dans ce mode de réalisation, les trajectoires T₁, T₂ assurées par les premier et deuxième moyens de guidage 21, 22 sont sensiblement circulaires, c'est-à-dire qu'elles décrivent chacune sensiblement un arc de cercle. En particulier, les trajectoires T₁, T₂ sont ici données par la forme des glissières 24 décrivant chacune un arc de cercle (voir figure 4).

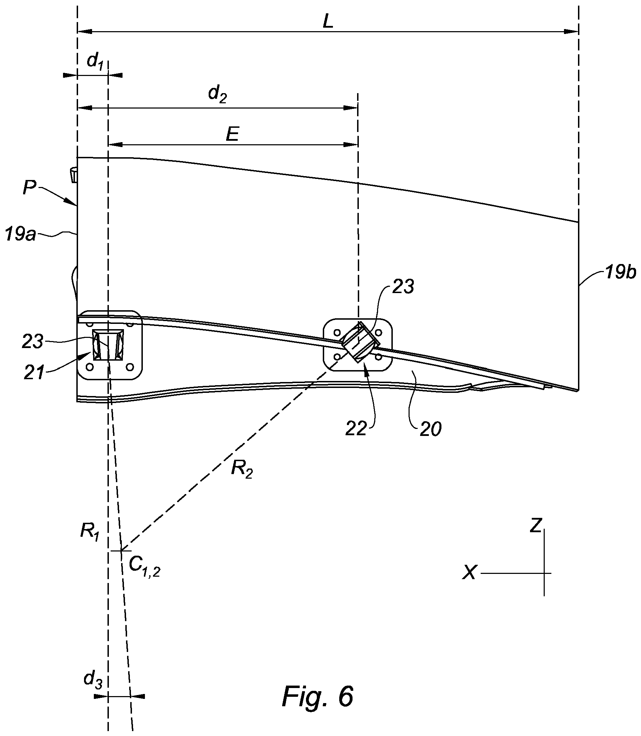

Les rails 23 quant à eux peuvent présenter différentes formes telles qu'une forme en arc ou arc de cercle (voir par exemple figure 6), en forme sphérique offrant l'avantage d'être compatible avec des courbures de trajectoires complexes, ou même une forme de tonneau.

La forme des rails 23 en arc de cercle est ici en particulier adaptée à la forme en arc de cercle des glissières 24. Une telle forme du rail 23 permet d'optimiser la pression de contact du 23 rail dans la glissière 24 associée.

On notera que des rails en forme de tonneau permettent quant à eux une meilleure adaptabilité lorsque les glissières 24 délimitent ou suivent une trajectoire curviligne qui n'est pas en arc de cercle et qui présente différents rayons de courbure ou que son rayon de courbure n'est pas constant.

Les premier et deuxième moyens 21, 22 de guidage sont agencés de sorte que les trajectoires T₁, T₂ qu'elles assurent présentent un centre trajectoire C_{1,2}, ou centre de rotation ici où la trajectoire est circulaire, commun. Ce centre de rotation C_{1,2} se situe au niveau de la veine secondaire. De cette manière, les première et deuxième trajectoires T₁, T₂ décrites par les premier et deuxième moyen de guidage 21, 22 présentent chacune une partie concave orientée vers l'intérieur de la tuyère 13.

La position des moyens de guidage 21, 22 peut varier en fonction de la longueur L axiale de la porte P associée prise entre ses bords amont 19a et aval 19b. De manière générale ces moyens de guidage 21, 22 sont placés à des zones prédéterminées de la porte P pour que la cinématique soit optimisée tout en permettant une répartition des efforts améliorée pour une dimension de porte P réduite.

On notera que, de manière générale, les dimensions des portes P telles que leur longueur L ou la cinématique désirée dépendent de plusieurs facteurs dont en particulier :
- des lignes aérodynamiques interne et externe (surtout interne) de la nacelle 1 et notamment de la tuyère 13,
- du pourcentage d'augmentation de la section de sortie souhaité,
- de l'angle de la porte P par rapport à la ligne aérodynamique, notamment dans la position de plus grande section : cet angle ne doit pas être trop important pour éviter perturbations de la ligne externe, de préférence entre 5% et 10% par rapport à l'axe longitudinal X, et de préférence encore environ 7%, et
- de la largeur de la porte : généralement plus la largeur de la porte est faible et plus sa longueur est importante, et inversement, ceci pour des raisons de résistances au contraintes notamment.

En particulier dans ce mode de réalisation la longueur L de chacune des portes P est comprise entre 480 mm et 520 mm.

Les premier et second moyens de guidage 21, 22 disposés ensemble par paire de chaque côté des portes P sont disposés de sorte qu'ils sont sensiblement alignés ensemble longitudinalement et que leur espacement E longitudinal l'un part rapport à l'autre soit au moins égale à 2/5, soit 40%, de la longueur L de la porte P. Cette distance E est ici sensiblement comprise entre 235 mm et 260 mm.

La position des moyens de guidage 21, 22 est également choisie de sorte que dans la position fermée de la tuyère 13 :
- le premier moyen de guidage 21, notamment le premier rail 23, est positionné longitudinalement à une distance d₁ sensiblement comprise entre 5% et 10% de la longueur L par rapport au bord amont 19a de la porte P associée ; et que
- le deuxième moyen de guidage 22, notamment le deuxième rail 23, est positionné longitudinalement sensiblement entre le milieu, c'est-à-dire à mi-distance entre les bords amont 19a et aval 19b, et le bord aval 19b de la porte P associée, et positionné de préférence longitudinalement à une distance d₂ sensiblement comprise entre 50% et 75% de la longueur L par rapport au bord amont 19a de la porte P associée (voir figure 6).

Les distances d₁ et d₂ sont ici mesurées par rapport au rail 23 associé solidaire de la porte. Ceci permet une position plus précise du fait que la glissière 24 doit nécessairement présenter une dimension longitudinale plus importante pour guider le rail 23.

Par ailleurs, afin d'améliorer encore la cinématique de la porte P lors de son déplacement, les rayons R₁ et R₂ des premières et deuxième trajectoires T₁, T₂, définis chacun par la distance séparant le centre de trajectoire C_{1,2} aux premier et deuxième moyens de guidage 21, 22, et en particulier à leur rail 23 respectif, sont choisis de sorte que le rayon R₁ est sensiblement compris entre 225 mm et 240 mm et le rayon R₂ est sensiblement compris entre 335 mm et 350 mm. De manière plus générale dans ce mode de réalisation, le rayon R₂ de la deuxième trajectoire T₂ est choisi supérieur au rayon R₁ de la première trajectoire T₁.

De cette manière, et du fait que le centre de rotation C_{1,2} de ces deux trajectoires est le même, le mouvement de la porte P localement au niveau du deuxième moyen de guidage 22 aval est plus grand que le mouvement de la porte P localement au niveau du premier moyen de guidage 21 amont et assure la cinématique de la porte P souhaité.

De manière générale, les moyens de guidage 21, 22 sont agencés pour que ledit centre de trajectoire C_{1,2} commun soit positionné longitudinalement entre les premier et deuxième moyens de guidage 21, 22.

Dans ce mode de réalisation, le centre de trajectoire C_{1,2} se situe longitudinalement à une distance d₃ comprise de préférence entre 0 et 20 mm du premier moyen de guidage 21, en particulier de son rail 23.

Par ailleurs, l'inclinaison des premier et deuxième rails 23, soit les angles formés par les cordes associées à chacun de ces premier et deuxième rails 23 par rapport à l'axe longitudinal X de la tuyère et de la nacelle 1, étant entendu par « corde », le segment joignant les extrémités de l'arc formé par chacun des rails, varie sensiblement entre -5° et 0° pour le premier rail 23 et entre 40° et 50° pour le deuxième rail 23.

Grâce à une telle configuration, il est possible d'obtenir une cinématique de déplacement de chacune des portes P qui n'interfère pas avec les lignes aérodynamiques internes de la nacelle, ceci tout en permettant d'ouvrir et d'avancer la porte P au maximum pour obtenir une fuite nécessaire au débit d'air voulu et de limiter l'angle de la porte P afin de ne pas dépasser une valeur d'angle qui génèrerait un flux divergent.

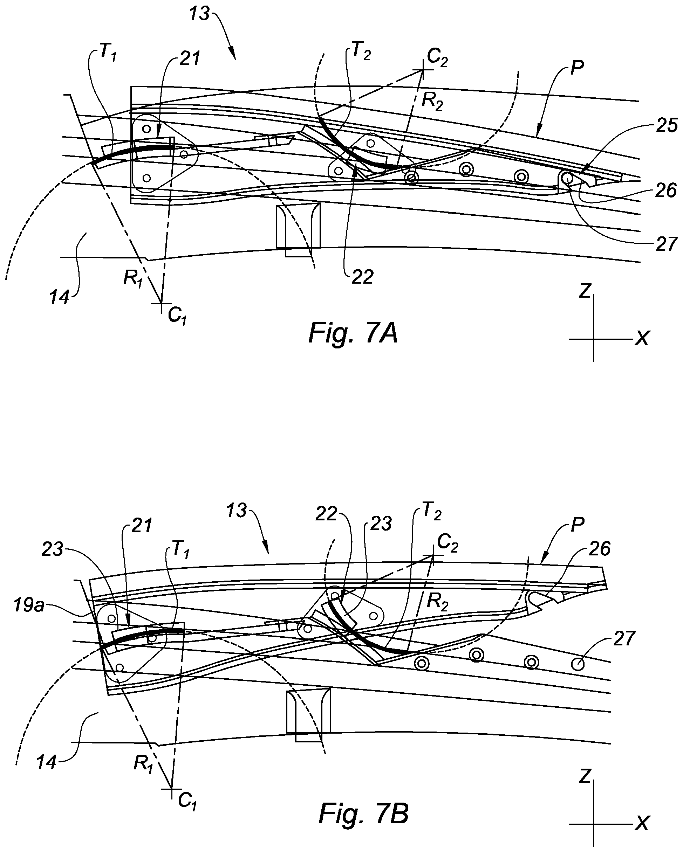

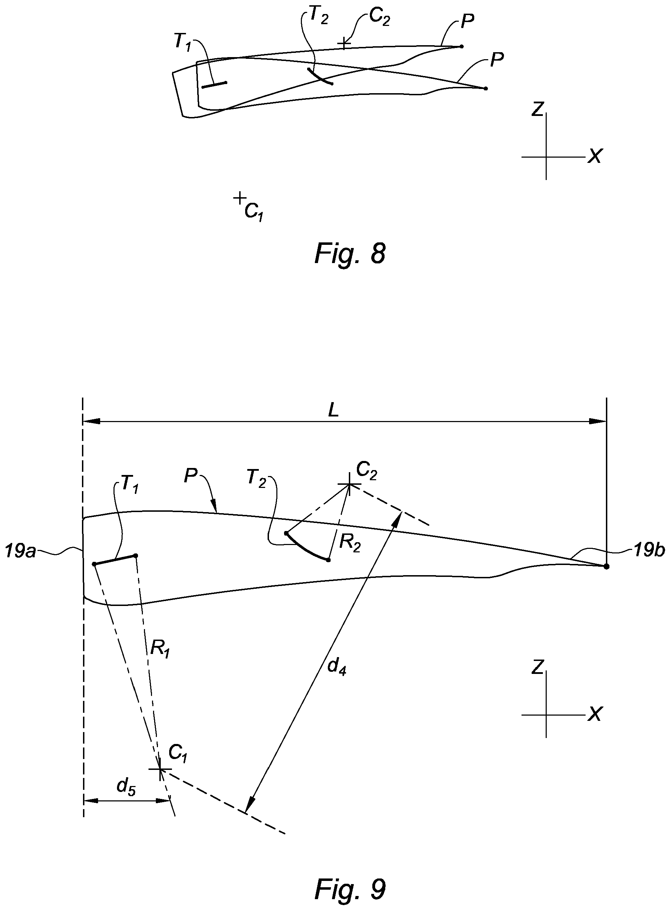

Les figures 7a, 7b, 8 et 9 illustrent des moyens de guidage 21, 22 selon un second mode de réalisation de l'invention.

Ce deuxième mode de réalisation diffère essentiellement du premier mode de réalisation en ce que les trajectoires T₁, T₂, assurées par les premier et deuxième moyens de guidage 21, 22 présentent des centre de trajectoire, ici de rotation, respectivement un premier centre de trajectoire C₁ et un deuxième centre de trajectoire C₂, qui sont distincts.

Ainsi, la première trajectoire T₁ décrite par le premier moyen de guidage 21 présente une partie concave orientée vers l'intérieur de la tuyère 13 et la deuxième trajectoire T₂ décrite par le deuxième moyen de guidage 22 présente une partie concave opposée, orientée vers l'extérieur de la tuyère 13.

Le premier centre de rotation C₁ associé à la première trajectoire T₁ se situe toujours au niveau de la veine secondaire.

Une telle configuration permet notamment une ouverture et une fermeture plus rapide de la porte P tout en respectant les exigences aérodynamiques.

Dans ce mode de réalisation la longueur L de chacune des portes P est comprise entre 480 mm et 550 mm.

Les premier et second moyens 21, 22 de guidage de chaque côté des portes P sont également disposés de sorte que leur espacement E longitudinal l'un part rapport à l'autre soit au moins égale à 2/5, soit 40%, de la longueur.

De la même manière que dans le mode de réalisation illustré sur les figures 4, 5A, 5B et 6, la position des moyens de guidage 21, 22 est choisie de sorte que dans la position fermée de la tuyère :
- le premier moyen de guidage 21, notamment le premier rail 23, est positionné longitudinalement à une distance d₁ sensiblement comprise entre 5% et 15% de la longueur L par rapport au bord amont 19a de la porte P associée ; et que
- le deuxième moyen de guidage 22, notamment le deuxième rail 23, est positionné longitudinalement sensiblement entre le milieu, c'est-à-dire à mi-distance entre les bords amont 19a et aval 19b, et le bord aval 19b de la porte P associée, et positionné de préférence longitudinalement à une distance d₂ sensiblement comprise entre 50% et 75% de la longueur L par rapport au bord amont 19a de la porte P associée.

Les rayons R₁ et R₂ des première et deuxième trajectoires T₁, T₂, sont ici choisis de sorte que le rayon R₁ est sensiblement compris entre 200 mm et 450 mm et le rayon R₂ est sensiblement compris entre 60 mm et 100 mm.

Les moyens de guidage sont agencés de sorte que le premier centre de trajectoire C₁ est positionné longitudinalement entre les premier et deuxième moyens de guidage 21, 22 et de sorte que le deuxième centre de trajectoire C₂ est positionné longitudinalement entre le deuxième moyen de guidage 22 et le bord aval 19b de la porte P. En d'autres termes, les centres de trajectoires sont situés longitudinalement en aval des moyens de guidage associés.

Les centres de rotation C₁, C₂ distincts des trajectoires T₁, T₂ assurées par les premier et deuxième moyens 21, 22 de guidage sont espacés l'un par rapport à l'autre d'une distance d₄ sensiblement comprise entre 60% à 70% de la longueur L de la porte P (la distance d₄ considérée est ici une distance prise dans l'espace et non rapportée longitudinalement).

Par ailleurs, et de manière plus générale, le centre de rotation C₁ ou C_{1,2} de la première trajectoire T₁ assurée par le premier moyen de guidage 21 est situé :
- longitudinalement entre les premier et deuxième moyens de guidage 21, 22 ; et/ou
- longitudinalement à une distance d₅ sensiblement comprise entre 5% et 15% de la longueur L axiale de la porte P par rapport à son bord amont 19a.

La tuyère 13 comporte en outre, pour chacune de ses portes P, au moins un système de verrouillage 25 qui comprend une gorge 26 solidaire de la porte P, ou de la structure fixe 14, dans laquelle se loge un ergot 27 solidaire de structure fixe 14 de la tuyère 13, ou respectivement de la porte P.

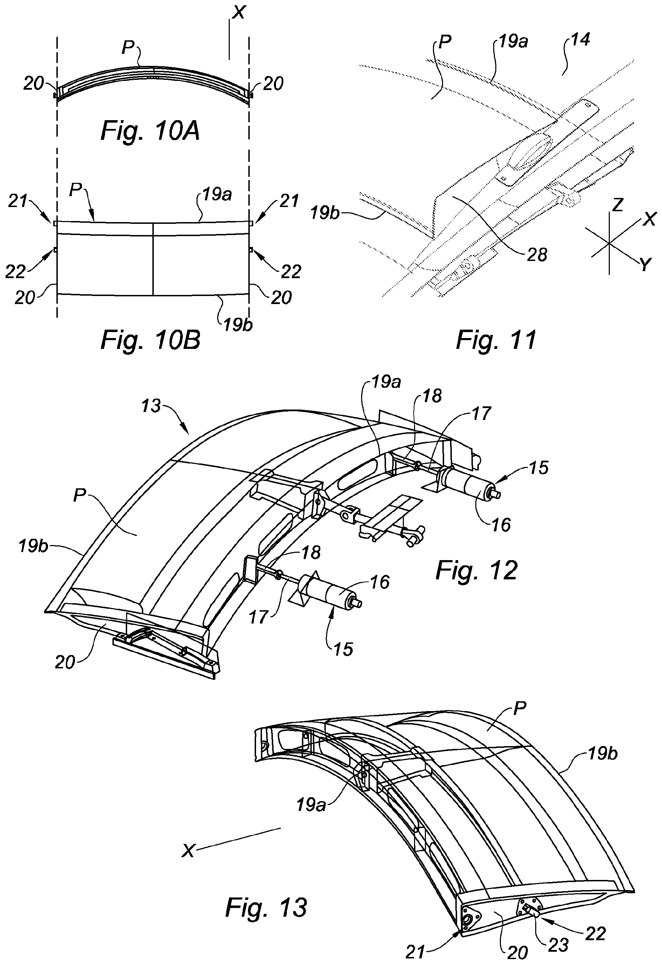

Les figures 10, 11, 12 et 13 illustrent en particulier une porte P selon un mode de réalisation préféré de l'invention.

En particulier, il est particulièrement visible sur les figures 10A et 10B que les flancs latéraux 20 de la porte P s'étendent selon la direction longitudinale X et sont sensiblement parallèles, à la fois entre eux et à l'axe longitudinal X. Cela permet de simplifier et fiabiliser les mécanismes de mise en mouvement de ces portes P et inscrire plus simplement les portes P dans la continuité aérodynamique de la tuyère 13.

Par ailleurs, la tuyère 13 présente de part et d'autres de chacune de ses portes P, une bavette latérale 28 permettant notamment d'assurer une étachnéité latérale pour guider le flux lorsque la porte P associée est mue vers l'extérieur de la tuyère 13.

Ces bavettes latérales 28 sont ici solidaires de la structure fixe 14 de la tuyère 13 et présentent une forme de paroi ou de panneau dressée radialement par rapport à la tuyère 13 et faisant saillie par rapport aux lignes aérodynamiques externes de la tuyère 13 et donc de la nacelle 1. Cette paroi est de plus en plus saillante par rapport aux lignes aérodynamiques externes de la tuyère 13 de l'amont vers l'aval. Ces bavettes latérales 28 peuvent être fixes ou mobiles.

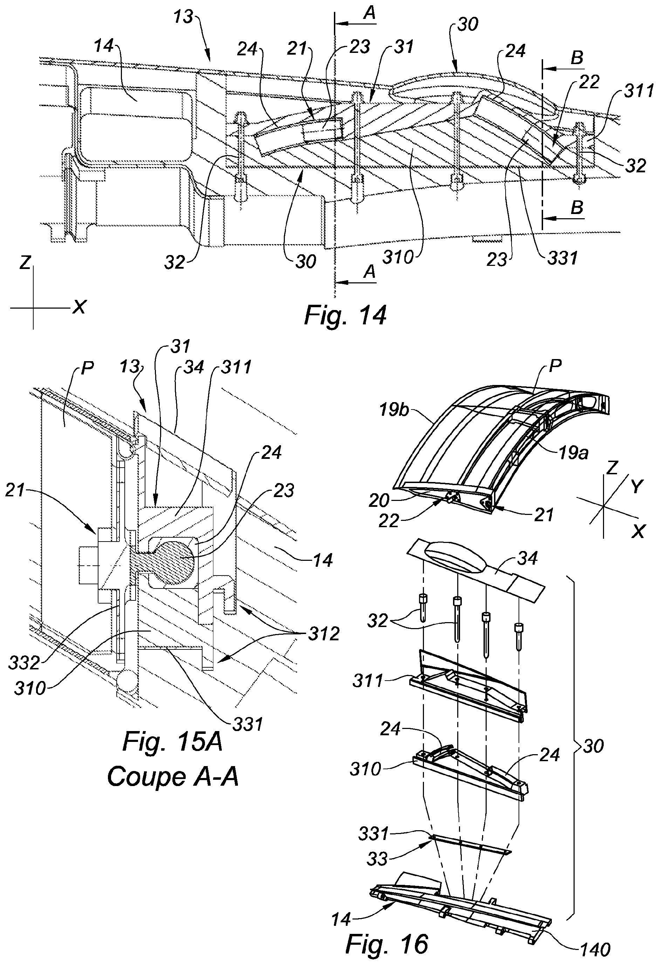

Les figures 14, 15A, 15B, 16, 17A et 17B illustrent un exemple d'intégration d'un premier et d'un deuxième moyen de guidage 21, 22 dans une structure de guidage 30 adaptée, une telle structure de guidage 30 étant située latéralement de part et d'autre de chacune des portes P équipant la tuyère 13.

Dans ces figures, les moyens de guidage 21, 22 sont ceux décrits en relation avec les figures, 5A, 5B et 6 à cela près que les rails 23 n'ont pas ici une forme en arc de cercle mais une forme de tonneau (voir par exemple figure 14).

La structure de guidage 30 comprend ici :
- un boitier 31 destiné à venir se loger dans une épaisseur de la structure fixe 14 de la tuyère 13 et à y être fixé par des moyens de fixation 32 amovibles, le boitier 31 comprenant une partie inférieure 310 et une partie supérieure 311 amovibles l'une par rapport à l'autre,
- une première partie des premier et deuxième moyens de guidage 21, 22, portée par le boitier 31,
- une seconde partie des premier et deuxième moyens de guidage 21, 22, agencée pour être positionnée sur le flanc latéral 20 de la porte P mobile associée et agencée pour coopérer de façon mobile avec la première partie des premier et deuxième moyens de guidage 21, 22, respectivement, et
- des moyens de réglage 33 de la structure de guidage 30.

Les moyens de réglage 33 de la structure de guidage 30 comprennent une première cale 331 de réglage en hauteur, selon une direction radiale Z à la tuyère 13, et une deuxième cale 332 de réglage en largeur, selon une direction transversale Y de la tuyère 13, orthogonal à l'axe radial Z, correspondant sensiblement à une direction tangentielle à la tuyère 13 au niveau des moyens de guidage 21, 22.

Le réglage affiné de la position des moyens de guidage 21, 22 permet un affleurement amélioré de la porte P associée avec un capotage externe de la tuyère 13. Les lignes aérodynamiques de la nacelle 1 sont donc améliorées et la trainée aérodynamique est minimisée.

La première partie des premier et deuxième moyens de guidage 21, 22, portée par le boitier 31 est formée notamment par les glissières 24 des moyens de guidages 21, 22 tandis que la seconde partie des premier et deuxième moyens de guidage 21, 22, agencée pour être positionnée sur le flanc latéral 20 de la porte P mobile associée et agencée pour coopérer de façon mobile avec la première partie des premier et deuxième moyens de guidage 21, 22, respectivement, est formée notamment par les rails 23 de cesdits moyens de guidage 21, 22, lesquels sont donc agencés pour coopérer avec les glissières 24 associées.

Même si une telle configuration est préférée car elle permet de limiter la masse de la porte P, elle n'est pas limitative et il pourrait être envisagé dans un mode de réalisation alternatif (non représenté) que les rails 23 soient solidaires de la structure fixe 14 de la tuyère 13 et les glissières 24 soient solidaires de la porte P.

Une telle structure de guidage 30 permet une intégration optimale d'un premier moyen de guidage 21 et d'un deuxième moyen de guidage 22 au niveau de chaque flanc latéral 20 de chaque porte P de la tuyère 13, ladite structure de guidage 30 étant ici disposée de part et d'autre de chacune des portes P.

Les moyens de fixation 32 étant amovibles et le boitier 31 étant à la fois logé dans l'épaisseur de la structure fixe 14 de la tuyère 13 et composée de deux parties inférieure 310 et supérieures 311 amovibles l'une par rapport à l'autre et en particulier ici amovibles aussi par rapport à la tuyère 13, l'accès aux moyens de guidage est alors facilité lors de la maintenance. Une telle structure de guidage 30 permet aussi de minimiser la trainée aérodynamique durant une phase de vol.

Ces moyens de fixation 32 amovibles sont ici des vis traversant radialement la partie inférieure 310 du boitier 31, la partie supérieure 311 du boitier 31 et la cale de réglage 331 en hauteur pour se fixer dans une poutre 140 de la structure fixe 14 de la tuyère 13.

Par ailleurs, dans ce mode de réalisation, la cale de réglage 332 en largeur est solidaire de la seconde partie, c'est-à-dire ici des rails 23, des premier et deuxième moyens de guidage 21, 22. La cale de réglage 331 en hauteur est quant à elle solidaire de la première partie, c'est-à-dire des glissières 24, des premier et deuxième moyens de guidage 21, 22. Alternativement, ces cales peuvent être indépendantes pour chaque rail 23 et pour chaque glissière 24 de chacun des moyens de guidage 21, 22.

Le réglage de l'affleurement de la porte P par rapport au capot arrière se fait ici par l'adjonction de cales de réglage 331 pour limiter le jeu.

La structure de guidage 30 comprend en outre, en position assemblée, un capotage 34 externe démontable recouvrant la partie supérieure 311 du boitier 31. Ce capotage 34 peut être soit une partie du capotage externe de la structure fixe 14 de la tuyère 13, soit une pièce distincte solidarisée par des moyens de liaison amovibles.

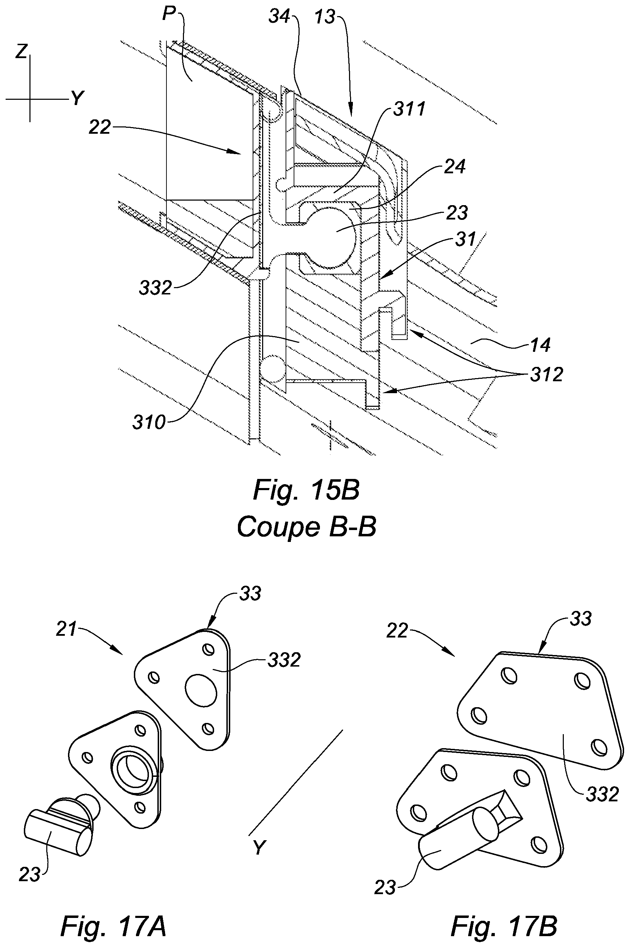

Comme cela est particulièrement visible sur les figures 15A, 15B, 17A et 17B, le rail 23 du premier moyen de guidage 21 est articulé par rapport à son support formé ici par le flanc latéral 20 de la porte. Plus précisément ce rail 23 est positionné libre en rotation par rapport à la porte P à laquelle il est solidarisé et autour d'un axe transversal Y au flanc latéral 20 associé.

Au contraire, le rail 23 du deuxième moyen de guidage 22 est fixe par rapport à la structure fixe 14 de la tuyère 13 à laquelle il est solidarisé. On comprend que, de façon générale, ce rail 23 peut être soit articulé, soit fixe en fonction de la cinématique de la porte P souhaitée.

Le partie inférieure 310 du boitier 31 est positionnée dans la structure fixe 14 (capot arrière de la nacelle) par un système de reprise d'efforts de type tenon/mortaise 312. La partie supérieure 311 du boitier 31 se positionne de la même façon sur la partie inférieure 310 dudit boitier et dans la structure fixe 14 de la tuyère 13.

Le boitier 31 permet, grâce à ses parties inférieure 310 et supérieure 311 peut prendre en sandwich, de préférence radialement, en position assemblée, la première partie, à savoir ici les glissières 24, des premier et deuxième moyens de guidage 21, 22, portée par le boitier 31. En effet, les parties inférieure 310 et supérieure 311 du boitier 31 sont agencées pour se superposer et coopérer ensemble, la première partie des premier et deuxième moyens de guidage 21, 22 étant intercalée entre ces parties inférieure 310 et supérieure 311 du boitier 31.

Une telle configuration permet, avec les moyens de fixation 32 amovibles, de faciliter le montage et le démontage de la structure de guidage 30 tout en assurant une résistance aux contraintes qui est adaptée.

L'utilisation de la structure de guidage 30 est indépendante du type de mécanismes (rotatif, guidage par rail, mixte de plusieurs solutions ...) et permet de pouvoir effectuer un montage, démontage et réglage simple en production et en maintenance.

Une telle structure de guidage permet en outre de proposer une solution optimale pour loger les moyens de guidage 21, 22 dans l'épaisseur des lignes aérodynamiques interne et externe de la tuyère et de la nacelle.

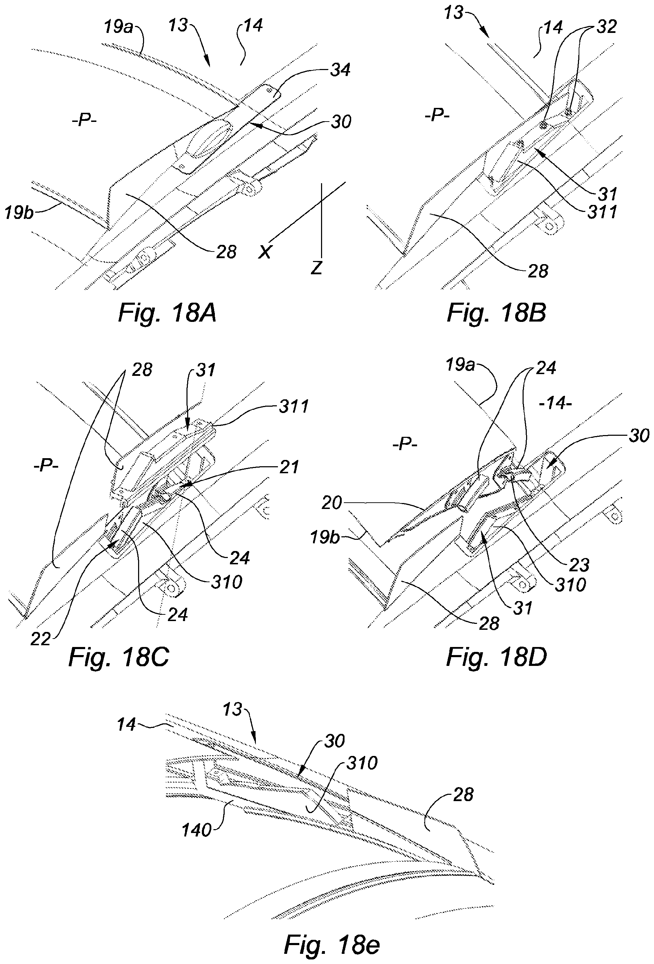

Les figures 18A, 18B, 18C, 18D et 18E illustrent des étapes d'un procédé de démontage de cette structure de guidage.

Un procédé de démontage de la structure de guidage 30 comporte les étapes suivantes :
- une étape de désolidarisation du capotage 34,
- une étape de démontage de la partie supérieure 311 du boitier 31 en enlevant les moyens de fixation 32 amovibles,
- une étape de démontage du flanc latéral 20 de la porte P associée avec les moyens de guidage 21, 22,
- une étape de désolidarisation de la partie inférieure 310 du boitier par rapport à la structure fixe 14 de la tuyère 13.

Un procédé de montage de la structure de guidage 30 correspondant comporte ces mêmes étapes que le procédé de démontage mais effectuées dans un ordre inversé, c'est-à-dire :
- une étape de fixation de la partie inférieure 310 du boitier à la structure fixe 14 de la tuyère 13,
- une étape d'insertion du flanc latéral 20 de la porte P associée avec les moyens de guidage 21, 22,
- une étape de fixation de la partie supérieure 311 du boitier 31 en par l'intermédiaire des moyens de fixation 32 amovibles, et
- une étape de mise en place du capotage 34.

Dans les étapes illustrées ont notera que une partie amont des bavettes latérales 28, située au droit du boitier 31 associée, est ici solidaire de la structure fixe 14 de la tuyère 13, mais plus précisément solidaire de la partie supérieure 311 du boitier 31 et même en un seul tenant. Cela facilite le démontage.

Ces étapes peuvent être mises en oeuvre afin par exemple d'ajouter et/ou enlever des cales de réglages 331, 332 pour régler les moyens de guidage 21, 22.

Une telle structure de guidage 30 permet d'offrir un montage, démontage et un réglage d'une porte VFN en atelier et/ou en maintenance qui est simple, rapide et accessible et cela dans un environnement de faible épaisseur pour des nacelles à fort taux de dilution.

Cette structure de guidage 30 permet d'enfermer au moins une partie des moyens de guidage 21, 22 dans deux parties inférieure 310 et supérieure 311 du boîtier 31, le tout pouvant être réglable en hauteur, reprenant les efforts mécaniquement par des tenons mortaises 312 et le tout assemblé par des boulons 32.

Une architecture d'une tuyère 13 munies de telles structures de guidage 30 et leur positionnement en partie supérieure (à 12h), inférieure (à 6h) et centrale (à 3h et 9h) par rapport à la tuyère 13 de la nacelle, dans les poutres 140 de la structure fixe 14 de ladite tuyère 13, minimise les excroissances en dehors des lignes aérodynamiques de la nacelle.

La tuyère 13 selon l'invention permet d'offrir une solution mettant en oeuvre une cinématique simple par rail/glissière de la porte P en rotation et/ou translation.

L'invention est décrite dans ce qui précède à titre d'exemple. Il est entendu que l'homme du métier est à même de réaliser différentes variantes de réalisation de l'invention sans pour autant sortir du cadre de l'invention.

## Revendications

1. Tuyère (13) de section variable pour nacelle (1) d'aéronef présentant un axe longitudinal (X), la tuyère (13) comprenant des portes (P) mobiles entre une position de moindre section et une position de plus grande section, et des moyens de déplacement (15) pour déplacer chacune des portes (P) entre lesdites positions, ces moyens de déplacement (15) comportant des actionneurs (16) et des moyens de commande de ces actionneurs (16), la tuyère (13) étant **caractérisée en ce que** chacune des portes (P) comprend au moins un premier (21) et un deuxième (22) moyens de guidage pour guider le déplacement des portes (P) par rapport à une structure fixe (14) de la tuyère (13), le deuxième moyen de guidage (22) étant placé en aval par rapport au premier moyen de guidage (22), les premier et deuxième moyens de guidage (21, 22) étant agencés pour assurer chacun, au moins localement, une trajectoire sensiblement curviligne, et **en ce que** les trajectoires (T1, T2) assurées par les premier et deuxième moyens de guidage (21, 22) sont sensiblement circulaires, décrivant chacune sensiblement un arc de cercle, la trajectoire (T1) du premier moyen de guidage (21) au moins présentant une partie concave orientée vers l'intérieur de la tuyère (13), et **en ce que** chacune des portes (P) est délimitée longitudinalement, par un bord amont (19a) et un bord aval (19b), et latéralement, par deux flancs latéraux (20), chacune des portes (P) de la tuyère (13) comprenant un premier et un second moyens de guidage (21, 22) au niveau de chacun de ses flancs latéraux (20).

2. Tuyère (13) de section variable selon la revendication 1, **caractérisée en ce que** les premier et deuxième moyens de guidage (21, 22) comprennent au moins un rail (23) agencé pour coulisser dans au moins une portion de glissière (24).

3. Tuyère (13) de section variable selon la revendication 1 ou 2, **caractérisée en ce que** les premier et deuxième moyens de guidage (21, 22), de préférence leur rail (23), sont espacés longitudinalement, l'un par rapport à l'autre, d'une distance au moins égale à 40% de la longueur (L) axiale de la porte (P) prise entre ses bords amont (19a) et aval (19b).

4. Tuyère (13) de section variable selon l'une quelconque des revendications précédentes, **caractérisée en ce que** :
- le premier moyen de guidage (21) est positionné longitudinalement à une distance sensiblement comprise entre 5% et 15% de la longueur (L) axiale de la porte (P) par rapport à son bord amont (19a) ; et/ou
- le deuxième moyen de guidage (22) est positionné longitudinalement sensiblement entre un milieu et le bord aval (19b) de la porte (P), de préférence à une distance sensiblement comprise entre 50% et 75% de la longueur (L) axiale de la porte (P) par rapport à son bord amont (19a).

5. Tuyère de section variable selon l'une quelconque des revendications précédentes, **caractérisée en ce que** les trajectoires (T1, T2), une première (T1) et une deuxième (T2) trajectoires, assurées respectivement par les premier et deuxième moyens de guidage (21, 22), présentent un centre de trajectoire (C1, C2) commun.

6. Tuyère (13) de section variable selon l'une quelconque des revendications précédentes, **caractérisée en ce qu'**elle comprend latéralement, de part et d'autres de chaque porte (P), au moins une bavette latérale (28) permettant d'assurer une étanchéité latérale pour guider le flux lorsque la porte (P) associée est mue vers l'extérieur de la tuyère (13).

7. Tuyère (13) de section variable selon l'une quelconque des revendications précédentes, **caractérisée en ce que** au moins un premier (21) et un deuxième (22) moyens de guidage sont intégrés, ensemble, dans une structure de guidage (30) comprenant :
- un boitier (31) destiné à venir se loger dans une épaisseur de la structure fixe (14) de la tuyère (13) et à y être fixé par des moyens de fixation (32) amovibles, le boitier (31) comprenant une partie inférieure (310) et une partie supérieure (311) amovibles l'une par rapport à l'autre,
- une première partie des premier et deuxième moyens de guidage (21, 22), portée par le boitier (31),
- une seconde partie des premier et deuxième moyens de guidage (21, 22), agencée pour être positionnée sur le flanc latéral (20) de la porte (P) mobile associée et agencée pour coopérer de façon mobile avec la première partie des premier et deuxième moyens de guidage (21, 22), respectivement, et
- des moyens de réglage (33) de la structure de guidage (30), comprenant de préférence au moins une première cale (331) de réglage en hauteur, selon une direction radiale (Z) de la tuyère (13), et au moins une deuxième cale (332) de réglage en largeur, selon une direction transversale (Y) de la tuyère, orthogonal à l'axe radial (Z).

8. Nacelle (1) pour turboréacteur d'aéronef, **caractérisée en ce qu'**elle comprend une tuyère (13) à section variable selon l'une quelconque des revendications précédentes.

## Patentansprüche

1. Düse (13) mit variablem Querschnitt für Gondel (1) eines Flugzeugs, eine Längsachse (X) aufweisend, wobei die Düse (13) Türen (P) umfasst, die zwischen einer Position mit geringem Querschnitt und einer Position mit größerem Querschnitt beweglich sind, und Verschiebemittel (15) zum Verschieben jeder der Türen (P) zwischen den Positionen, wobei diese Verschiebemittel (15) Aktoren (16) und Mittel zum Steuern dieser Aktoren (16) beinhalten, wobei die Düse (13) **dadurch gekennzeichnet ist, dass** jede der Türen (P) mindestens ein erstes (21) und ein zweites (22) Führungsmittel zum Führen der Verschiebung der Türen (P) im Verhältnis zu einer feststehenden Struktur (14) der Düse (13) umfasst, wobei das zweite Führungsmittel (22) stromabwärts im Verhältnis zum ersten Führungsmittel (22) platziert ist, wobei das erste und zweite Führungsmittel (21, 22) eingerichtet sind, um jeweils zumindest lokal für einen im Wesentlichen krummlinigen Bahnverlauf zu sorgen, und dadurch, dass die Bahnverläufe (T1, T2), für die das erste und zweite Führungsmittel (21, 22) sorgen, im Wesentlichen kreisförmig sind, wobei jede im Wesentlichen einen Kreisbogen beschreibt, wobei der Bahnverlauf (T1) zumindest des ersten Führungsmittels (21) einen konkaven Abschnitt aufweist, der ins Innere der Düse (13) ausgerichtet ist, und dadurch, dass jede der Türen (P) der Länge nach durch einen stromaufwärtigen Rand (19a) und einen stromabwärtigen Rand (19b) und seitlich durch zwei seitliche Flanken (20) begrenzt wird, wobei jede der Türen (P) der Düse (13) ein erstes und ein zweites Führungsmittel (21, 22) im Bereich jeder ihrer seitlichen Flanken (20) umfasst.

2. Düse (13) mit variablem Querschnitt nach Ansprüch 1, **dadurch gekennzeichnet, dass** das erste und zweite Führungsmittel (21, 22) mindestens eine Schiene (23) umfassen, die eingerichtet ist, um in mindestens einem Gleitschienenabschnitt (24) zu gleiten.

3. Düse (13) mit variablem Querschnitt nach Anspruch 1 oder 2, **dadurch gekennzeichnet, dass** das erste und zweite Führungsmittel (21, 22), vorzugsweise deren Schiene (23) der Länge nach im Verhältnis zueinander um eine Distanz von mindestens gleich 40% der axialen Länge (L) der Tür (P) beabstandet sind, die zwischen ihrem stromaufwärtigen (19a) und stromabwärtigen (19b) Rand angenommen ist.

4. Düse (13) mit variablem Querschnitt nach einem der vorstehenden Ansprüche, **dadurch gekennzeichnet, dass**:
- das erste Führungsmittel (21) der Länge nach in einer Distanz positioniert ist, die im Wesentlichen zwischen 5% und 15% der axialen Länge (L) der Tür (P) im Verhältnis zu ihrem stromaufwärtigen Rand (19a) enthalten ist; und/oder
- das zweite Führungsmittel (22) der Länge nach im Wesentlichen zwischen einer Mitte und dem stromabwärtigen Rand (19b) der Tür (P), vorzugsweise in einer Distanz positioniert ist, die im Wesentlichen zwischen 50% und 75% der axialen Länge (L) der Tür (P) im Verhältnis zu ihrem stromaufwärtigen Rand (19a) enthalten ist.

5. Düse mit variablem Querschnitt nach einem der vorstehenden Ansprüche, **dadurch gekennzeichnet, dass** die Bahnverläufe (T1, T2), ein erster (T1) und ein zweiter (T2) Bahnverlauf, für die jeweils das erste und zweite Führungsmittel (21, 22) sorgen, ein gemeinsames Bahnverlaufszentrum (C1, C2) aufweisen.

6. Düse (13) mit variablem Querschnitt nach einem der vorstehenden Ansprüche, **dadurch gekennzeichnet, dass** sie seitlich, beiderseits einer jeden Tür (P) mindesten eine seitliche Schürze (28) umfasst, die es ermöglicht, für eine seitliche Abdichtung zu sorgen, um die Strömung zu führen, wenn die zugeordnete Tür (P) nach außerhalb der Düse (13) bewegt wird.

7. Düse (13) mit variablem Querschnitt nach einem der vorstehenden Ansprüche, **dadurch gekennzeichnet, dass** mindestens ein erstes (21) und ein zweites (22) Führungsmittel gemeinsam in eine Führungsstruktur (30) integriert sind, umfassend:
- ein Gehäuse (31), das dazu bestimmt ist, in einer Dicke der feststehenden Struktur (14) der Düse (13) untergebracht zu werden, und dort durch abnehmbare Befestigungsmittel (32) befestigt zu werden, wobei das Gehäuse (31) einen unteren Abschnitt (310) und einen oberen Abschnitt (311) umfasst, die im Verhältnis zueinander abnehmbar sind,
- einen ersten Abschnitt des ersten und zweiten Führungsmittels (21, 22), der von dem Gehäuse (31) getragen wird,
- einen zweiten Abschnitt des ersten und zweiten Führungsmittels (21, 22), der eingerichtet ist, um an der seitlichen Flanke (20) der beweglichen Tür (P) positioniert zu werden, zugeordnet und eingerichtet, um beweglich jeweils mit dem ersten Abschnitt des ersten und zweiten Führungsmittels (21, 22) zusammenzuwirken, und
- Mittel zum Einstellen (33) der Führungsstruktur (30), vorzugsweise mindestens einen ersten Unterlegkeil (331) zur Höheneinstellung in eine radiale Richtung (Z) der Düse (13) und mindestens einen zweiten Unterlegkeil (332) zur Breiteneinstellung in eine querlaufende Richtung (Y) der Düse, orthogonal zur radialen Achse (Z) umfassend.

8. Gondel (1) für Turbotriebwerk eines Flugzeugs, **dadurch gekennzeichnet, dass** sie eine Düse (13) mit variablem Querschnitt nach einem der vorstehenden Ansprüche umfasst.

## Claims

1. A variable-section nozzle (13) for an aircraft nacelle (1) having a longitudinal axis (X), the nozzle (13) comprising doors (P) which are movable between a reduced-section position and a larger-section position, and displacement means (15) for displacing each of the doors (P) between said positions, these displacement means (15) including actuators (16) and means for controlling these actuators (16), the nozzle (13) being **characterized in that** each of the doors (P) comprises at least one first guide means (21) and one second guide means (22) for guiding the displacement of the doors (P) relative to a fixed structure (14) of the nozzle (13), the second guide means (22) being placed downstream relative to the first guide means (22), the first and second guide means (21, 22) being arranged to ensure each, at least locally, a substantially curvilinear trajectory, and **in that** the trajectories (T1, T2) ensured by the first and second guide means (21, 22) are substantially circular, each substantially describing a circular arc, at least the trajectory (T1) of the first guide means (21) having a concave portion oriented towards the inside of the nozzle (13), and **in that** each of the doors (P) is delimited longitudinally, by an upstream edge (19a) and a downstream edge (19b), and laterally, by two lateral sidewalls (20), each of the doors (P) of the nozzle (13) comprising first and second guide means (21, 22) at the level of each of the lateral sidewalls (20) thereof.

2. The variable-section nozzle (13) according to claim 1, **characterized in that** the first and second guide means (21, 22) comprise at least one rail (23) arranged to slide in at least one guideway portion (24).

3. The variable-section nozzle (13) according to claim 1 or 2, **characterized in that** the first and second guide means (21, 22), preferably the rail (23) thereof, are spaced longitudinally, relative to each other, by a distance at least equal to 40% of the axial length (L) of the door (P) considered between the upstream (19a) and downstream (19b) edges thereof.

4. The variable-section nozzle (13) according to any one of the preceding claims, **characterized in that**:
- the first guide means (21) is positioned longitudinally at a distance substantially comprised between 5% and 15% of the axial length (L) of the door (P) relative to the upstream edge (19a) thereof; and/or
- the second guide means (22) is positioned longitudinally substantially between a middle and the downstream edge (19b) of the door (P), preferably at a distance substantially comprised between 50% and 75% of the axial length (L) of the door (P) relative to the upstream edge (19a) thereof.

5. The variable-section nozzle according to any one of the preceding claims, **characterized in that** the trajectories (T1, T2), first (T1) and second (T2) trajectories, ensured respectively by the first and second guide means (21, 22), have a common trajectory center (C1, C2).

6. The variable-section nozzle (13) according to any one of the preceding claims, **characterized in that** it comprises laterally, on either side of each door (P), at least one lateral flap seal (28) allowing ensuring a lateral sealing in order to guide the flow when the associated door (P) is moved outwardly of the nozzle (13).

7. The variable-section nozzle (13) according to any one of the preceding claims, **characterized in that** at least one first guide means (21) and one second guide means (22) are integrated, together, in a guide structure (30) comprising:
- a case (31) intended to be housed within a thickness of the fixed structure (14) of the nozzle (13) and to be fastened thereto by removable fastening means (32), the case (31) comprising a lower portion (310) and an upper portion (311) which are removable from each other,
- a first portion of the first and second guide means (21, 22), carried by the case (31),
- a second portion of the first and second guide means (21, 22), arranged to be positioned on the lateral sidewall (20) of the associated movable door (P) and arranged to movably cooperate with the first portion of the first and second guide means (21, 22), respectively, and
- means (33) for adjusting the guide structure. (30), preferably comprising at least one first height adjustment wedge (331), in a radial direction (Z) of the nozzle (13), and at least one second width adjustment wedge (332), in a transverse direction (Y) of the nozzle, which is orthogonal to the radial axis (Z).

8. A nacelle (1) for an aircraft turbojet engine, **characterized in that** it comprises a variable-section nozzle (13) according to any one of the preceding claims.
